# EUROPEAN PATENT APPLICATION

(11) **EP 4 489 141 A1**
(43) Date of publication of application: **08.01.2025**
(21) Application number: 23763556.0
(22) Date of filing: 02.03.2023
(51) Int. Cl.: H01M 4/62, H01M 4/13, H01M 4/139, H01M 10/052, H01M 10/0562

(54) **SECONDARY BATTERY BINDER, SECONDARY BATTERY BINDER SHEET, PRODUCTION METHOD THEREFOR, AND SECONDARY BATTERY**

(30) Priority: 02.03.2022 JP 2022032057
(71) Applicant: DAIKIN INDUSTRIES, LTD., Osaka-shi, Osaka 530-0001 (JP)
(72) Inventor: YAMADA, Takaya, Osaka-shi, Osaka 530-0001 (JP); YAMADA, Masahiko, Osaka-shi, Osaka 530-0001 (JP); TERADA, Junpei, Osaka-shi, Osaka 530-0001 (JP); FUJIWARA, Kae, Osaka-shi, Osaka 530-0001 (JP); HIRAGA, Kentarou, Osaka-shi, Osaka 530-0001 (JP); SUI, Xianwei, Osaka-shi, Osaka 530-0001 (JP)
(74) Representative: Hoffmann Eitle
(86) International application number: PCT/JP2023/007906
(87) International publication number: WO 2023/167299

(57) **Abstract**

The present disclosure provides a secondary battery mixture that has good properties, a secondary battery mixture sheet containing the mixture, and a secondary battery using the secondary battery mixture sheet. The secondary battery mixture contains a solid-state electrolyte and/or electrode active material, and a binder, wherein the binder is a fibrillatable resin having a fibrous structure with a fibril diameter (median value) of 100 nm or less, and is contained in the secondary battery mixture in an amount of 0.3% by mass or more and 8% by mass or less.

## Description

### Technical Field

The present disclosure relates to a secondary battery mixture, a secondary battery mixture sheet, a production method thereof, and a secondary battery.

### Background Art

For a lithium ion secondary battery, it is common to produce a secondary battery sheet by coating a slurry obtained by mixing a binder and a solvent on an electrode active material and a conductive aid and then drying.

Meanwhile, a fibrillatable resin, such as a polytetrafluoroethylene resin, is also used as a binder by fibrillating the resin.

Patent Literature 1 discloses a method for producing an electrode in which polytetrafluoroethylene is fibrillated by subjecting a mixture including an active material and a polytetrafluoroethylene mixed binder material to a high shear treatment with a jet mill.

Patent Literature 2 discloses obtaining an all-solid-state lithium ion secondary battery by using a specific oxide-based solid-state electrolyte and producing an electrolyte layer and an electrode layer from a slurry.

Patent Literature 3 discloses a method of producing a film by mixing sulfur-based solid ion conductor inorganic particles and a tetrafluoroethylene (TFE) polymer to form a paste, and then calendering or extruding the resultant mixture.

### Citation List

### Patent Literature

Patent Literature 1: Japanese Translation of PCT International Application Publication No. 2017-517862
Patent Literature 2: Japanese Translation of PCT International Application Publication No. 2015-153588
Patent Literature 3: International Publication No. WO 2021-043493

### Summary of Invention

### Technical Problem

An object of the present disclosure is to provide a secondary battery mixture which has good properties, a secondary battery mixture sheet containing the mixture, and a secondary battery using the secondary battery mixture sheet.

Another object of the present disclosure is to provide a method for producing a secondary battery mixture sheet containing a binder having a fine fiber structure.

### Solution to Problem

The present disclosure relates to a secondary battery mixture containing a solid-state electrolyte and/or electrode active material, and a binder, wherein
the binder is a fibrillatable resin having a fibrous structure with a fibril diameter (median value) of 100 nm or less, and is contained in the secondary battery mixture in an amount of 0.3% by mass or more and 8% by mass or less.

It is preferred that the fibrillatable resin is a polytetrafluoroethylene resin.

It is preferred that the secondary battery mixture is obtained using a raw material composition containing a solid-state electrolyte and/or electrode active material, and a binder, in which the binder in the raw material composition is a powdered fibrillatable resin.

It is preferred that the powdered fibrillatable resin has a moisture content of 500 ppm or less.

It is preferred that the powdered fibrillatable resin is a powdered polytetrafluoroethylene resin.

It is preferred that the powdered polytetrafluoroethylene resin has a standard specific gravity of 2.12 to 2.20.

It is preferred that the powdered polytetrafluoroethylene resin includes 80% by mass or more of a polytetrafluoroethylene resin having a secondary particle size of 450 µm or more.

It is preferred that the secondary battery mixture is for a solid-state secondary battery.

The present disclosure also relates to a secondary battery mixture sheet including the secondary battery mixture.

The present disclosure also relates to an electrode including a secondary battery mixture sheet including the secondary battery mixture.

The present disclosure also relates to a method for producing a secondary battery mixture sheet including a solid-state electrolyte and/or electrode active material, and a binder, wherein the binder is a fibrillatable resin having a fibrous structure with a fibril diameter (median value) of 100 nm or less, and is contained in the secondary battery mixture in an amount of 0.3% by mass or more and 8% by mass or less,
the method including:
   (a) mixing the solid-state electrolyte and/or electrode active material and the binder to form the secondary battery mixture; and
   (b) calendering or extrusion-forming the secondary battery mixture to produce a sheet,
wherein the mixing in (a) includes:
   (a1) homogenizing the solid-state electrolyte and/or electrode active material and the binder into a powder; and
   (a2) mixing the powdered raw material composition obtained in (a1) to prepare the secondary battery mixture.

It is preferred that the homogenization in (al) is performed at a temperature of 19°C or lower, and the mixing in (a2) is performed at a temperature of 30°C or higher.

It is preferred that, in (b), the calendering or extrusion is performed at a temperature of 30 to 150°C.

It is preferred that the mixing in (a) is performed while applying a shear force.

The present disclosure also relates to a secondary battery including the above-described secondary battery mixture sheet.

### Advantageous Effects of Invention

The present disclosure can provide a secondary battery mixture that has good properties, a secondary battery mixture sheet containing the mixture, and a secondary battery using the secondary battery mixture sheet.

### Description of Embodiment(s)

The present disclosure will now be described in detail.

The present disclosure provides a secondary battery mixture that can be suitably used in a secondary battery, and a mixture sheet containing the same.

In the secondary battery mixture of the present disclosure and the mixture sheet containing the same, a fibrillatable resin such as polytetrafluoroethylene resin (PTFE) is used as a binder. For a conventional secondary battery mixture, a common method to prepare the secondary battery mixture is to use a resin that dissolves in a solvent, such as a copolymer of vinylidene fluoride and hexafluoropropylene, as a binder, and coat and dry a slurry containing such a binder.

On the other hand, it is known that when shear stress is applied to PTFE in a particulate state, for example, the PTFE readily forms fibrils. By utilizing this property of readily forming fibrils, PTFE can be used as a binder. That is, the fibrillated PTFE entangles other powder components and the like to bind the powder components, thereby acting as a binder upon forming of the powder components.

However, even when used as a fibrillated binder, if the fibrillation is not sufficient, a good performance cannot be achieved when used as a secondary battery mixture. In the present disclosure, based on investigations carried out regarding this point, it is possible to achieve a good performance by performing a fine fibrillation treatment so that the fibrillatable resin has a fibrous structure with a fibril diameter (median value) of 100 nm or less, and using the fibrillated binder as a binder in a secondary battery mixture.

The present disclosure has been completed based on the discovery that when obtaining a secondary battery mixture, a secondary battery mixture that has good properties, and a mixture sheet containing the same, can be obtained by using fibrillatable resin as a binder so that the fibrillatable resin has a fine fiber structure.

Further, the present disclosure can improve battery performance by reducing the content of the binder in a secondary battery mixture, making it possible to obtain an electrode containing more active material or conductive aid.

The secondary battery mixture of the present disclosure is obtained using a raw material composition containing a binder, and the binder is preferably a powdered fibrillatable resin. Since a powdered binder is used as a raw material instead of a binder-containing dispersion, the problem of solvent selectivity is avoided. In addition, since a dispersion is not used, there is little moisture derived from the raw material in the secondary battery mixture, and so there is no problem arising due to the presence of moisture in the mixture. As a result, there are the advantages that it is possible to create a battery with excellent ion conduction, and battery performance can be improved.

The secondary battery mixture of the present disclosure has, as a constituent component, a binder having a fibrous structure when forming a secondary battery mixture. Further, in the present disclosure, it is important that the binder have a fibril diameter (median value) of 100 nm or less. Thus, the object of the present invention is achieved by allowing a fibrillated binder with a fine fibril diameter to be present in the secondary battery mixture, which acts to bind the powders of the components constituting the secondary battery mixture.

The fibril diameter (median value) is a value measured by the following method.
(1) Using a scanning electron microscope (Model S-4800, manufactured by Hitachi, Ltd.), an enlarged photograph (7,000x) of the secondary battery mixture sheet is taken to obtain an image.
(2) Two lines equidistant from each other are drawn on the image in the horizontal direction to divide the image into three equal parts.
(3) The diameter of each fibrillated binder on the upper straight line is measured at three locations, and the average value is taken as the fibrillated binder diameter. The three locations to be measured are the intersection between the fibrillated binder and the straight line, and the locations 0.5 µm above and below the intersection (binder primary particles not formed into fibrils are excluded).
(4) The task of (3) above is then carried out for all the fibrillated binders on the lower straight line.
(5) Starting from the first image, the solid-state secondary battery mixture sheet is moved 1 mm in the right direction of the screen, photographed again, and the diameter of the fibrillated binder is measured according to the above (3) and (4). This is repeated until the number of fibrillated binders measured exceeds 80, and then the measurement is terminated.
(6) The median value of the diameters of all the fibrillated binders measured above is taken as the size of the fibril diameter.

The fibril diameter (median value) is preferably 100 nm or less, more preferably 85 nm or less, and further preferably 70 nm or less. It should be noted that excessive fibril formation tends to result in loss of flexibility. Although the lower limit is not limited, from the viewpoint of strength, for example, the lower limit is preferably not less than 15 nm, more preferably not less than 20 nm, and further preferably not less than 31 nm.

Examples of the method for obtaining a binder having the above-described fibril diameter (median value) include, but are not limited to a method including:
a step (1) of applying a shear force while mixing a raw material composition including a solid-state electrolyte and/or electrode active material, and a binder powder;
a step (2) of forming the secondary battery mixture obtained in step (1) into a bulk shape; and
a step (3) of rolling the bulk-shape secondary battery mixture obtained in step (2) into a sheet shape.

In such a method, for example, by setting the mixing condition of the raw material composition to 15,000 rpm or less in step (1), the fibrillation of the binder can be advanced while maintaining flexibility, and by controlling the shear stress to be applied, the fibril diameter (median value) of the binder can be made 100 nm or less.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

That is, the secondary battery mixture can be produced by applying a shear force to fibrillate the binder powder, which becomes entangled with the powder components such as the active material and the solid-state electrolyte. This production method is described later.

The above-described "binder powder" means a solid state as a powder, not a dispersed state mixed with a liquid medium. The object of the present disclosure can be suitably achieved by producing a secondary battery mixture using the binder in such a state, which is a state in which a liquid medium is not present.

In the present disclosure, an active material is an essential component in the mixture for a secondary battery containing an electrolytic solution, and a solid-state electrolyte is an essential component in the mixture for a solid-state secondary battery. Further, when used as an electrode, a conductive aid may be used as necessary.

It is preferred that the powdered fibrillatable resin serving as the raw material for preparing the secondary battery mixture of the present disclosure has a moisture content of 500 ppm or less.

Setting the moisture content to 500 ppm or less is preferable in terms of reducing deterioration in the solid-state electrolyte when a solid-state electrolyte is used as a powder component.

More preferably, the moisture content is 300 ppm or less.

In the present disclosure, the content of the binder in the secondary battery mixture needs to be 0.3% by mass or more and 8% by mass or less.

The lower limit of the binder content is preferably 0.4% by mass or more, and more preferably 0.5% by mass or more. The upper limit of the binder content is preferably 7% by mass or less, more preferably 6% by mass or less, further preferably 4% by mass or less, still further preferably 1.7% by mass or less, and most preferably 1.0% by mass or less.

When the total of the powder components and the binder is 100% by mass, the lower limit of the binder content is preferably 0.3% by mass or more, more preferably 0.4% by mass or more, and particularly preferably is 0.5% by mass or more. The upper limit is preferably 8% by mass or less, more preferably 7% by mass or less, particularly preferably 6% by mass or less, further preferably 4% by mass or less, still further preferably 1.7% by mass or less, and most preferably 1.0% by mass or less.

In the present disclosure, by setting the binder content in the above range, the secondary battery mixture sheet can maintain good strength and have excellent battery performance.

In the present disclosure, the fibrillatable resin is a resin that readily forms fibrils when shear stress is applied to fibrillatable resin. By using such a fibrillatable resin as the binder, the fibrillated resin can entangle other powder components and the like to bind the powder components, and thereby act as a binder upon forming of the powder components. Examples of the fibrillatable resin include a liquid crystal polymer (LCP), cellulose, acrylic resin, ultra-high molecular weight polyethylene, PTFE, and the like. Among them, PTFE is preferred in terms of chemical stability, thermal stability, and processability.

In the present disclosure, the PTFE is not limited, and may be a homopolymer or a copolymer that can be fibrillated.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The powdered PTFE preferably has a standard specific gravity of 2.12 to 2.20. Having a standard specific gravity within the above range is advantageous in that an electrode mixture sheet having a high strength can be produced. The lower limit of the standard specific gravity is more preferably not less than 2.13. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of polytetrafluoroethylene resin having a secondary particle size of 450 µm or more. When the PTFE having a secondary particle size of 450 µm or more is within the above range, there is an advantage that a high-strength mixture sheet can be produced.

By using PTFE with a secondary particle size of 450 µm or more, it is possible to obtain a mixture sheet with lower resistance and high toughness.

The lower limit of the average secondary particle size of the powdered PTFE is more preferably 450 µm, and further preferably 500 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows an electrode mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the extrusion pressure can be suppressed and the better the formability is upon extrusion the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

The secondary battery mixture of the present disclosure may be used as an electrode for a solid-state battery or as an electrode for a battery containing an electrolytic solution. Further, the secondary battery mixture of the present disclosure may be used in a solid-state electrolyte layer in a solid-state battery. The object of the present disclosure is achieved by combining the components constituting the mixture depending on these uses and causing fibrillation to occur in such a manner that the above-mentioned parameters are satisfied.

When the electrode is an electrode for a solid-state battery, the secondary battery mixture further contains an electrode active material and a solid-state electrolyte. When the electrode is an electrode for a battery containing an electrolytic solution, the secondary battery mixture contains an electrode active material. The secondary battery mixture may contain a conductive aid and other components as necessary. Each of the components constituting the electrode will be described in detail below.

### (Electrode active material)

When the secondary battery mixture sheet of the present disclosure is used as a sheet for a positive electrode, the secondary battery mixture sheet includes a positive electrode active material. As the positive electrode active material, a positive electrode active material known as a positive electrode active material for solid-state batteries can be employed. In particular, it is preferable to use a positive electrode active material capable of absorbing and desorbing lithium ions.

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
an alkali metal-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
an alkali metal-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕGoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g} (4)

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ (where M is at least one metal selected from the group consisting of Li, Na and K) and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which LiNiO₂ or LiCoO₂ is dissolved as a solid solution in a base of Li₂MnO₃ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5%, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

Among the above-described positive electrode active materials, a nickel-containing positive electrode active material is preferred. By containing nickel, the active material can have a higher capacity, and battery performance can be improved. Further, it is possible to reduce the amount of the rare metal cobalt, which is advantageous in terms of cost.

In particular, it is preferable to contain a lithium-nickel composite oxide.

The lithium-nickel composite oxide is preferably a lithium-nickel composite oxide represented by the general formula (1):

Li_{y}Ni₁₋ₓMₓO₂

wherein x is 0.01≤x≤0.5, y is 0.9≤y≤1.2, and M represents a metal atom (excluding Ni). Thus, a positive electrode active material containing a large amount of Ni is useful for increasing the capacity of the secondary battery.

In the general formula (1), x is a coefficient satisfying 0.01≤x≤0.5. Further, from the viewpoint of obtaining a high-capacity secondary battery, x is preferably 0.05≤x≤0.4, and more preferably 0.10≤x≤0.3.

In the general formula (1), examples of the metal atom of M include V, Ti, Cr, Mn, Fe, Co, Cu, Al, Zn, Mg, Ga, Zr, Si, and the like. The metal atom of M is preferably a transition metal such as V, Ti, Cr, Mn, Fe, Co, or Cu, or a combination of such a transition metal with another metal such as Al, Ti, V, Cr, Mn, Fe, Co, Cu, Zn, Mg, Ga, Zr, and Si.

The lithium-nickel composite oxide is preferably at least one selected from the group consisting of LiNi_{0.82}Co_{0.15}Al_{0.03}O₂, LiNi_{0.6}Mn_{0.2}Co_{0.2}O₂, and LiNi_{0.8}Mn_{0.1}Co_{0.1}O₂, and is more preferably at least one selected from the group consisting of LiNi_{0.82}Co_{0.15}Al_{0.03}O₂ and LiNi_{0.8}Mn_{0.1}Co_{0.1}O₂.

A positive electrode active material different from the lithium-nickel composite oxide represented by the general formula (1) may be used in combination with the lithium-nickel composite oxide represented by the general formula (1). Specific examples of a different positive electrode active material include LiCoO₂, LiMnO₂, LiMn₂O₄, Li₂MnO₃, LiMn_{1.8}Al_{0.2}O₄, Li₄Ti₅O₁₂, LiFePO₄, Li₃Fe₂(PO₄)₃, LiFeP₃O₇, LiCoPO₄, Li_{1.2}Fe_{0.4}Mn_{0.4}O₂, LiNiO₂, LiNi_{0.5}Mn_{0.5}Co_{0.2}O₂, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the solid-state electrolyte at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the solid-state electrolyte as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the solid-state electrolyte increases, so the diffusion of lithium ions between the sheet for the all-solid-state secondary battery and the solid-state electrolyte can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn is replaced with another transition metal or the like, or a combination of LiFePO₄ and LiCoO₂ or a material in which a part of the Co is replaced with another transition metal or the like.

From the viewpoint of a high battery capacity, the content of the positive electrode active material in the positive electrode mixture is preferably 50 to 99.5% by mass, more preferably 60 to 99% by mass, and more preferably 69 to 96.7% by mass.

Further, the content of the positive electrode active material is preferably 80% by mass or more, more preferably 82% by mass or more, and particularly preferably 84% by mass or more. Further, the upper limit is preferably not more than 99% by mass, more preferably not more than 98% by mass. If the content of the positive electrode active material in the positive electrode mixture is low, the electric capacity may be insufficient. Conversely, if the content is too high, the electron/ion conductivity and strength of the positive electrode may be insufficient.

When using the secondary battery mixture sheet of the present disclosure as a negative electrode sheet, a negative electrode active material is incorporated in the secondary battery mixture sheet.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

From the viewpoint of a high battery capacity, the content of the negative electrode active material in the negative electrode mixture is preferably 50 to 99.5% by mass, more preferably 60 to 99% by mass, and more preferably 69 to 96.7% by mass.

Further, the content of the negative electrode active material is preferably 80% by mass or more, more preferably 82% by mass or more, and particularly preferably 84% by mass or more. In addition, the upper limit is preferably 99% by mass or less, and more preferably 98% by mass or less. If the content of the negative electrode active material in the negative electrode mixture is low, the electric capacity may be insufficient. Conversely, if the content is too high, the electron/ion conductivity and strength of the negative electrode may be insufficient.

### (Solid-state electrolyte)

The solid-state electrolyte used in the secondary battery mixture of the present disclosure may be a sulfide-based solid-state electrolyte or an oxide-based solid-state electrolyte. In particular, when a sulfide-based solid-state electrolyte is used, there is the advantage of flexibility.

Examples of the sulfide-based solid-state electrolyte include a lithium ion conductive inorganic solid-state electrolyte that satisfies the composition represented by the following formula (1):

Liₐ₁M_{b1}P_{c1}S_{d1}Aₑ₁ (1)

wherein M represents an element selected from B, Zn, Sn, Si, Cu, Ga, Sb, Al, and Ge, A represents an element selected from I, Br, Cl and F, a1 to e1 indicate a composition ratio of each element, a1:b1:c1:d1:e1 satisfies 1 to 12:0 to 5:1:2 to 12:0 to 10, a1 is preferably 1 to 9, more preferably 1.5 to 7.5, b1 is preferably 0 to 3, more preferably 0 to 1, d1 is preferably 2.5 to 10, more preferably 3.0 to 8.5, and e1 is preferably 0 to 5, more preferably 0 to 3.

In the present disclosure, the sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The composition ratio of each element can be controlled by adjusting the blending amount of the raw material compounds when producing the sulfide-based inorganic solid-state electrolyte, as described below.

The sulfide-based inorganic solid-state electrolyte may be amorphous (glass) or crystallized (glass-ceramic), or only partially crystallized. For example, Li-P-S glass containing Li, P, and S, or Li-P-S glass ceramic containing Li, P, and S can be used.

The sulfide-based inorganic solid-state electrolyte can be produced by reacting at least two or more raw materials from among, for example, lithium sulfide (Li₂S), a phosphorus sulfide (for example, diphosphorus pentasulfide (P₂S₅)), elemental phosphorus, elemental sulfur, sodium sulfide, hydrogen sulfide, a lithium halide (for example, LiI, LiBr, LiCl), and a sulfide of the above-described element represented by M (for example, SiS₂, SnS, GeS₂).

As specific examples of the sulfide-based inorganic solid-state electrolyte, examples of raw material combinations are shown below. Examples of such combinations include Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S3, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. However, the mixing ratio of each raw material is not limited.

In particular, it is preferred that the sulfide-based solid-state electrolyte is a sulfide-based solid-state electrolyte satisfying the composition represented by the following formula (A):

aLi₂S-bX¹S₂-cLiX²-(1-a-b-c)P₂S₅ (A)

wherein 0.6≤a≤0.86, 0≤b≤0.333, 0≤c≤0.3, 0.05≤b+c≤0.4, X¹ represents Ge, Sn, Ti or Si, X² represents Cl, Br, or I, and any one of b or c is not 0.

Specific examples of the sulfide-based solid-state electrolyte represented by the above formula (A) may be selected from any of 0.714 Li₂S - 0.143 SnS₂ - 0.143 P₂S₅ (Li₁₀SnP₂S₁₂ (LSPS)), 0.625 Li₂S - 0.25 LiCl - 0.125 P₂S₅ (Li₆PS₅Cl (LPSCl)), 0.715 Li₂S - 0.143 GeS2 - 0.142 P₂S₅ (Li₁₀GeP₂S₁₂ (LGPS)), and the like, or a mixture of two or more types can be used.

The average particle size of the sulfide-based solid-state electrolyte is preferably 0.1 µm or more and 20 µm or less. The upper limit is more preferably 0.2 µm or more, and further preferably 0.3 µm or more. The upper limit is more preferably 18 µm or less, and further preferably 15 µm or less.

If the average particle size of the sulfide-based solid-state electrolyte is less than 0.1 µm, handling of the powder may be difficult. On the other hand, if the average particle size of the sulfide-based solid-state electrolyte exceeds 20 µm, press formability may deteriorate.

The average particle diameter of the sulfide-based solid-state electrolyte particles is measured by the following procedure.

A dispersion is prepared by diluting the sulfide-based solid-state electrolyte particles with water (heptane for materials unstable in water) to 1% by mass in a 20 ml sample bottle. Ultrasonic waves of 1 kHz are applied on the diluted dispersion sample for 10 minutes, and immediately after that, the sample is used for the test. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The method for adjusting the average particle size of the sulfide solid-state electrolyte is not limited, and may be carried out, for example, as follows. A known crusher or classifier is used. For example, a mortar, a sand mill, a ball mill, a jet mill, or a sieve is preferably used. Depending on the properties of the solid-state electrolyte, a solvent such as water or ethanol may be added during crushing. To obtain a desired particle size, it is preferable to perform classification. The classification is not limited, and may be performed using a sieve, a wind classifier, or the like.

The above-described oxide-based solid-state electrolyte is preferably a compound that contains an oxygen atom (O), has the ion-conducting property of a metal belonging to Group 1 or Group 2 of the Periodic Table, and has an electron insulating property.

The ion conductivity of the oxide-based solid-state electrolyte is preferably 1×10⁻⁶ S/cm or more, more preferably 5×10⁻⁶ S/cm or more, and particularly preferably 1×10⁻⁵ S/cm or more.

Specific examples of the compound include LiₓₐLa_{ya}TiO₃ (xa satisfies 0.3≤xa≤0.7, ya satisfies 0.3≤ya≤0.7) (LLT); Li_{xb}La_{yb}Zr_{zb}M^{bb}_{mb}O_{nb} (M^{bb} is one or more elements selected from Al, Mg, Ca, Sr, V, Nb, Ta, Ti, Ge, In, and Sn. xb satisfies 5≤xb≤10, yb satisfies 1≤yb≤4, zb satisfies 1≤zb≤4, mb satisfies 0≤mb≤2, and nb satisfies 5≤nb≤20); Li_{xc}B_{yc}M^{cc}_{zc}O_{nc} (M^{cc} is one or more elements selected from C, S, Al, Si, Ga, Ge, In, and Sn, xc satisfies 0≤xc≤5, yc satisfies 0≤yc≤1, zc satisfies 0≤zc≤1, and nc satisfies 0≤nc≤6); Li_{xd}(Al,Ga)_{yd}(Ti,Ge)_{zd}Si_{ad}P_{md}O_{nd} (xd satisfies 1≤xd≤3, yd satisfies 0≤yd≤1, zd satisfies 0≤zd≤2, ad satisfies 0≤ad≤1, md satisfies 1≤md≤7, and nd satisfies 3≤nd≤13); Li₍₃₋₂ₓₑ₎M^{ee}ₓₑD^{ee}O (xe represents a number of 0 or more and 0.1 or less, M^{ee} represents a divalent metal atom; D^{ee} represents a halogen atom or a combination of two or more halogen atoms); Li_{xf}Si_{yf}O_{zf} (xf satisfies 1≤xf≤5, yf satisfies 0<yf≤3, and zf satisfies 1≤zf≤10); Li_{xg}S_{yg}O_{zg} (xg satisfies 1≤xg≤3, yg satisfies 0< yg≤2, and zg satisfies 1≤zg≤10); Li₃BO₃; Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w is w<1), Li_{3.5}Zn_{0.25}GeO₄ having a LISICON (Lithium super ionic conductor) type crystal structure; La_{0.55}Li_{0.35}TiO₃ having a perovskite type crystal structure; LiTi₂P₃O₁₂ having a NASICON (Natrium super ionic conductor) type crystal structure, Li_{1+xh+yh} (Al,Ga)ₓₕ(Ti,Ge)₂₋ₓₕSi_{yh}P_{3-yh}O₁₂ (xh satisfies 0≤xh≤1, and yh satisfies 0≤yh≤1); and specific examples of those are, for example, Li_{1.3}Al_{0.3}Ti_{1.7}(PO₄)₃ and the like. Further examples include Li₇La₃Zr₂O₁₂ (LLZ) having a garnet-type crystal structure.

Further, ceramic materials obtained by substituting an element into LLZ are also known. For example, it is preferable to use a ceramic material containing at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium), Hf (hafnium), Ta (tantalum), W (tungsten), Bi (bismuth), and lanthanide elements. Specific examples include Li_{6.25}La₃Zr₂Al_{0.25}O₁₂, and the like.

Further, phosphorus compounds containing Li, P, and O are also desirable. Examples thereof include lithium phosphate (Li₃PO₄) ; LiPON in which some of the oxygens in the lithium phosphate are substituted with nitrogen, LiPOD¹ (D¹ is preferably one or more elements selected from Ti, V, Cr, Mn, Fe, Co, Ni, Cu, Zr, Nb, Mo, Ru, Ag, Ta, W, Pt, and Au), and the like.

In addition, it is also possible to preferably use LiA¹ON (A¹ is one or more elements selected from Si, B, Ge, Al, C, Ga, or the like).

Specific examples include Li₂O-Al₂O₃-SiO₂-P₂O₅-TiO₂-GeO₂, Li₂O-Al₂O₃-SiO₂-P₂O₅-TiO₂, and the like.

The above-described oxide-based inorganic solid-state electrolytes preferably contain at least one element selected from the group consisting of Mg, Al, Si, Ca, Ti, Ga, Sr, Nb, Sn, Ba, and W. Oxide-based inorganic solid-state electrolytes containing these are particularly preferred in terms of having a good Li-ion-conducting property.

The oxide-based solid-state electrolyte preferably contains lithium. Lithium-containing oxide-based solid-state electrolytes are used in solid-state batteries that use lithium ions as carriers, and are particularly preferred for electrochemical devices having a high energy density.

The oxide-based solid-state electrolyte is preferably an oxide having a crystal structure. Oxides having a crystal structure are particularly preferred in terms of having a good Li-ion-conducting property.

Examples of oxides having a crystal structure include perovskite type (La_{0.51}Li_{0.34}TiO_{2.94} etc.), NASICON type (Li_{1.3}Al_{0.3}Ti_{1.7}(PO₄)₃ etc.), garnet type (Li₇La₃Zr₂O₁₂ (LLZ), etc.), and the like. Among them, the NASICON type is preferable.

The volume average particle size of the oxide-based solid-state electrolyte is not limited, but is preferably 0.01 µm or more, and more preferably 0.03 µm or more. The upper limit is preferably not more than 100 µm, and more preferably not more than 50 µm.

The average particle size of the oxide-based solid-state electrolyte particles is measured by the following procedure. A dispersion is prepared by diluting the oxide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The content of the solid-state electrolyte in the solid components of the secondary battery mixture is, when considering a reduction of interfacial resistance and maintenance of the reduced interfacial resistance when used in a solid-state secondary battery, with respect to 100% by mass of the solid components, in the electrode preferably 3% by mass or more, more preferably 4% by mass or more, particularly preferably 5% by mass or more, and more particularly preferably 10% by mass or more. From the same viewpoint, the upper limit is preferably 99% by mass or less, more preferably 90% by mass or less, and particularly preferably 80% by mass or less.

Further, in the solid-state electrolyte layer provided between the positive electrode and the negative electrode, the content is preferably 50% by mass or more, more preferably 60% by mass or more, and particularly preferably 70% by mass or more. From the same viewpoint, the upper limit is preferably 99.9% by mass or less, more preferably 99.8% by mass or less, and particularly preferably 99.7% by mass or less.

The solid-state electrolyte may be used alone or in combination of two or more.

As used herein, the solid content (solid components) refers to the components that do not disappear through volatilization or evaporation when drying is performed at 170°C for 6 hours in a nitrogen atmosphere.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. One type of these may be used alone, or two or more types may be used in any combination or ratio.

In the case of using a conductive aid, the conductive aid is used such that it has a content in the secondary battery mixture of usually 0.01% by mass or more, preferably 0.1% by mass or more, and more preferably 0.5% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Other components)

The secondary battery mixture sheet may further include a thermoplastic resin.

Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the active material in the electrode mixture will decrease, which may cause problems such as a decrease in battery capacity and an increase in resistance between active materials.

In the secondary battery mixture sheet of the present disclosure, as a proportion of the binder in the secondary battery mixture sheet, the binder content is usually 0.2% by mass or more, preferably 0.3% by mass or more, and more preferably 0.5% by mass or more, and is usually 10% by mass or less, preferably 6.0% by mass or less, more preferably 4% by mass or less, still further preferably 1.7% by mass or less, and most preferably 1.0% by mass or less. If the binder proportion is too low, the active material cannot be retained sufficiently in the secondary battery mixture sheet, and the mechanical strength of the secondary battery mixture sheet is insufficient, which may cause a battery performance such as cycle characteristics to worsen. On the other hand, if the binder proportion is too high, this may lead to a decrease in battery capacity and electric conductivity.

The secondary battery mixture of the present disclosure is particularly suitable for a lithium ion solid-state secondary battery.

The secondary battery mixture of the present disclosure is typically used in sheet form when used in a solid-state secondary battery.

The secondary battery mixture sheet of the present disclosure can be a sheet for a positive electrode or a sheet for a negative electrode. Further, it can be a sheet for a solid-state electrolyte layer.

Among these, when used as an electrode sheet, the secondary battery mixture sheet of the present disclosure contains active material particles. The active material particles can be used as a positive electrode active material or a negative electrode active material. The secondary battery mixture sheet of the present disclosure can be more suitably used as a positive electrode sheet using a positive electrode active material. Moreover, when used as an electrode sheet, the secondary battery mixture sheet of the present disclosure may optionally contain a conductive aid.

The thickness of the secondary battery mixture sheet of the present disclosure is preferably 10 to 150 µm, and more preferably 15 to 100 µm.

### (Production method)

The method for producing a secondary battery mixture sheet of the present disclosure preferably uses a raw material composition obtained by mixing the components described above, and forms this raw material composition into a sheet. When forming the sheet, a drying process can be omitted, and thus a method in which a shear stress is applied to the raw material composition, which is a powder, either by reducing the amount of liquid medium used or not using a liquid medium at all, and a slurry is not prepared, is preferable.

The method for producing the secondary battery mixture sheet of the present disclosure is not limited, and an example of a specific method thereof is as follows.

It is preferred that the production method includes:
a step (a) of mixing the solid-state electrolyte and/or electrode active material and the binder to form the secondary battery mixture; and
a step (b) of calendering or extrusion-forming the secondary battery mixture to produce a sheet,
wherein the mixing in step (a) includes:
   a step (a1) of homogenizing the solid-state electrolyte and/or electrode active material and the binder into a powder; and
   a step (a2) of mixing the powdered raw material composition obtained in step (a1) to prepare the secondary battery mixture.

For example, PTFE has two transition temperatures at about 19°C and about 30°C. Below 19°C, PTFE can be easily mixed while maintaining its shape. However, above 19°C, the structure of the PTFE particles becomes looser, and the PTFE becomes more sensitive to mechanical shear. At temperatures above 30°C, a higher degree of fibrillation begins to occur.

For this reason, it is preferred that the homogenization in step (a1) is performed at a temperature of 19°C or lower, preferably 0°C to 19°C.

That is, in such (a1), it is preferable to achieve homogenization by mixing without causing fibrillation.

After that, it is preferable to cause fibrillation by performing the mixing in the subsequent step (a2) at a temperature of 30°C or higher.

The above step (a2) is preferably performed at a temperature of 30°C to 150°C, more preferably 35°C to 120°C, and further more preferably 40°C to 80°C.

In one embodiment, the calendering or extrusion in step (b) is performed at a temperature between 30°C and 150°C, preferably between 35°C and 120°C, and more preferably between 40°C and 100°C.

It is preferable to perform the mixing in the above step (a) while applying a shear force.

Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, a Henschel mixer, high-speed mixer, and the like.

The mixing conditions may be appropriately set in terms of rotation speed and mixing time. For example, the number of revolutions is preferably 15,000 rpm or less. The number of revolutions is in the range of preferably 10 rpm or more, more preferably 1,000 rpm or more, and further preferably 3,000 rpm or more, and is in the range of preferably 12,000 rpm or less, more preferably 11,000 rpm or less, and further preferably 10,000 rpm or less. If the number of rotations is less than the above range, the mixing takes time, which affects productivity. On the other hand, if the number of rotations exceeds the above range, excessive fibrillation may occur, resulting in an electrode mixture sheet with inferior strength.

It is preferable to perform step (a1) using a weaker shear force than in step (a2).

The raw material composition preferably does not contain a liquid solvent, but a small amount of lubricant may be used in the above step (a2). That is, a paste may be prepared by adding a lubricant to the powdered raw material composition obtained in the above step (a1).

The lubricant is not limited, and examples thereof include ether compounds, alcohols, ionic liquids, carbonates, aliphatic hydrocarbons (low polar solvents such as heptane and xylene), isoparaffinic hydrocarbon compounds, petroleum fractions (gasoline (C4-C10), naphtha (C4-C11), kerosene/paraffin (C10-C16), and mixtures thereof), and the like.

The lubricant preferably has a moisture content of 1000 ppm or less.

It is preferable that the moisture content is 1000 ppm or less because deterioration of battery performance is reduced. Further preferably, the moisture content is 500 ppm or less.

When using the lubricant, it is particularly preferable to use a low polar solvent such as heptane or xylene, or an ionic liquid.

When using the lubricant, the amount of the lubricant may be, with respect to the total mass of the raw material composition used in step (a1), 5.0 to 35.0 parts by mass, preferably 10.0 to 30.0 parts by mass, and more preferably 15.0 to 25.0 parts by mass.

As described above, the raw material composition is preferably substantially free of a liquid medium. In the conventional method for producing a secondary battery mixture, it is common to prepare a slurry in which a powder, which is a component of the secondary battery mixture, is dispersed by using a solvent in which a binder is dissolved, and then prepare the solid-state secondary battery mixture sheet by coating and drying the slurry. In this case, a solvent for dissolving the binder is used. However, the solvents capable of dissolving the binder resin that have conventionally generally been used are limited to specific solvents such as butyl butyrate. Such solvents may react with the solid-state electrolyte, causing the solid-state electrolyte to degrade, resulting in a decrease in battery performance. In addition, low-polarity solvents such as heptane are very limited in terms of the types of binder resins that they can dissolve, and they have a low flash point, which can make them difficult to handle.

In the powdered raw material composition obtained in the above step (a1), the content of the liquid medium is preferably 1% by mass or less.

Further, in the secondary battery mixture of the present disclosure, the content of the liquid medium is preferably 1% by mass or less.

A battery having reduced deterioration of the solid-state electrolyte can be produced by not using a solvent and using a low-moisture powdered binder, when forming the secondary battery mixture sheet. Further, in such a production method, a secondary battery mixture sheet containing a binder having a fine fiber structure can be produced, and because a slurry is not prepared, the burden of the production process can be reduced.

In step (b), calendering or extrusion is performed. The calendering or extrusion can be performed by known methods. By performing the calendering or extrusion, the secondary battery mixture can be formed into the shape of an electrode mixture sheet.

Step (b) preferably includes a step (b1) of forming the secondary battery mixture obtained in the step (a) into a bulk shape, and a step (b2) of calendering or extrusion-forming the bulk-shape secondary battery mixture.

Forming into a bulk shape means forming the secondary battery mixture into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter of the cross section or the minimum size is 10,000 µm or more, and more preferably 20,000 µm or more.

Examples of a specific method for performing the calendering or extrusion-forming in the above step (b2) include rolling the secondary battery mixture using a roll press machine, a calendar roll machine, or the like.

The above step (b) is preferably carried out at 30 to 150°C. As described above, since PTFE has a glass transition temperature around 30°C, it readily forms fibrils at temperatures above 30°C. Therefore, it is preferable to perform step (b) at such a temperature.

Since a shear force is applied during the calendering or extrusion, the applied shear force causes the PTFE to form fibrils, resulting in formation.

It is also preferable to have, after the step (b), a step (c) of applying a larger load to the obtained roll sheet and rolling it into a thinner sheet. It is also preferable to repeat step (c). In this way, the flexibility is improved by rolling the sheet little by little in stages instead of thinning the roll sheet all at once.

The number of times that step (c) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (b) or step (c), a step (d) of coarsely crushing the roll sheet, then again forming into a bulk shape, and rolling into a sheet. It is also preferable to repeat step (d). The number of times that step (d) is carried out is preferably 1 time or more and 12 times or less, and more preferably 2 times or more and 11 times or less.

In step (d), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (b) or step (c) into another form for rolling into a sheet shape in the next step, and may include a case of simply folding a roll sheet.

Step (c) may be performed after step (d), or may be performed repeatedly.

Further, uniaxial stretching or biaxial stretching may be carried out in step (a) as well as steps (b), (c), and (d).

In addition, the fibril diameter (median value) can also be adjusted by the degree of coarse crushing in step (d) .

In the above steps (b), (c), and (d), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

The above steps (c) to (d) are preferably performed at a temperature of 30°C or higher, and more preferably 60°C or higher. Moreover, the above steps (c) to (d) are preferably performed at a temperature of 150°C or lower.

As described above, the fibrillatable resin used as a binder becomes fibrillated by applying shear force. In order to have a fibrous structure with a fibril diameter (median value) of 100 nm or less, if the shear stress is excessive, excessive fibrillation may proceed, which impairs flexibility. Further, if shear stress is weak, strength may not be sufficient. For this reason, during mixing and rolling, the resin is rolled and stretched into a sheet by applying an appropriate shear stress to the fibrillatable resin to promote fibrillation, whereby a fibrous structure with a fibril diameter (median value) of 100 nm can be obtained.

As described above, the secondary battery mixture sheet of the present disclosure can be either a sheet for a positive electrode or a sheet for a negative electrode. Further, it can be a sheet for a solid-state electrolyte layer.

When used as a mixture sheet for a positive electrode or a sheet for a negative electrode, in the production of the secondary battery mixture sheet, the positive electrode active material or negative electrode active material may be mixed with the binder.

The positive electrode and negative electrode are described below.

### (Positive electrode)

In the present disclosure, it is preferable that the positive electrode is constructed from a current collector and the above-described sheet for a positive electrode.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The positive electrode may be produced according to a conventional method. For example, a method of laminating the sheet for a positive electrode and the current collector with an adhesive between them and drying the laminate can be used.

The density of the sheet for a positive electrode is preferably 2.0 g/cm³ or more, more preferably 2.1 g/cm³ or more, and further preferably 2.3 g/cm³ or more, and preferably 4.0 g/cm³ or less, more preferably 3.9 g/cm³ 3 or less, and further preferably 3.8 g/cm³ or less. If the density exceeds this range, the electric conductivity between the active materials decreases, the battery resistance increases, and a high output may not be obtained. If the density is lower than this range, the obtained battery may be hard, tend to crack, have a low active material content, and have a low capacity.

The thickness of the positive electrode is not limited, but from the viewpoint of a high capacity and a high output, the thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the present disclosure, it is preferable that the negative electrode is constructed from a current collector and the above-described sheet for a negative electrode.

Examples of the material of the current collector for the negative electrode include metals such as copper, nickel, titanium, tantalum, stainless steel, and nickel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. For example, a method of laminating the sheet for a negative electrode and the current collector with an adhesive between them and drying the laminate can be used.

The density of the sheet for a negative electrode is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the solid-state electrolyte near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the metal foil thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

### (Solid-state secondary battery)

The present disclosure also relates to a solid-state secondary battery including the above-described secondary battery mixture sheet.

The secondary battery of the present disclosure may be a solid-state secondary battery or a secondary battery using an electrolytic solution.

### (Solid-state secondary battery)

The solid-state secondary battery may be an all-solid-state secondary battery or a hybrid solid-state secondary battery that combines gel-like polymer electrolyte and a solid-state electrolyte.

Further, the solid-state secondary battery is preferably a lithium ion solid-state secondary battery.

The solid-state secondary battery of the present disclosure is a solid-state secondary battery including a positive electrode, a negative electrode, and a solid-state electrolyte layer provided between the positive electrode and the negative electrode. The positive electrode, the negative electrode, and the solid-state electrolyte layer contain a sheet for a positive electrode, a sheet for a negative electrode, or a solid-state electrolyte layer sheet, which are the secondary battery mixture sheet of the present disclosure as described above. In addition, in the solid-state secondary battery of the present disclosure, something other than the secondary battery mixture sheet of the present disclosure may be used for a part of the positive electrode, the negative electrode, and the solid-state electrolyte layer.

The laminated structure of the solid-state secondary battery in the present disclosure includes a positive electrode including the sheet for a positive electrode and a positive electrode current collector, a negative electrode including the sheet for a negative electrode and a negative electrode current collector, and a solid-state electrolyte layer sandwiched between the positive electrode and the negative electrode.

The separator and the battery case used in the solid-state secondary battery according to the present disclosure will be described in detail below.

### (Separator)

The solid-state secondary battery of the present disclosure may have a separator between the positive electrode and the negative electrode. Examples of the separator include a porous membrane such as polyethylene and polypropylene, a nonwoven fabric made of resin such as polypropylene, a nonwoven fabric such as a glass fiber nonwoven fabric, and the like.

### (Battery design)

The solid-state secondary battery of the present disclosure may further include a battery case. The shape of the battery case used in the present disclosure is not limited as long as it can accommodate the above-described positive electrode, negative electrode, electrolyte layer for a solid-state battery, and the like, but specific examples can include a cylindrical shape, a rectangular shape, a coin shape, a laminate, and the like.

The solid-state secondary battery of the present disclosure may be produced by, for example, first laminating the positive electrode, the solid-state electrolyte layer sheet, and the negative electrode in this order, and then pressing to form a solid-state secondary battery.

It is preferable to use the secondary battery mixture sheet of the present disclosure because this enables a solid-state secondary battery to be produced with less moisture in the system, and a solid-state secondary battery with a good performance can be obtained.

### (Secondary battery using electrolytic solution)

An electrode produced using the secondary battery mixture sheet of the present disclosure can be used as a positive electrode or a negative electrode in various secondary batteries using an electrolytic solution. The secondary battery is a battery using a non-aqueous electrolytic solution, and examples thereof can include a lithium ion battery.

### (Electrolytic solution)

As the non-aqueous electrolytic solution, a known electrolyte salt dissolved in a known organic solvent for dissolving the electrolyte salt can be used.

Examples of the organic solvent for the dissolving electrolyte salt include, but are not limited to, one or more known hydrocarbon-based solvents, such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorinated solvents, such as fluoroethylene carbonate, fluoroether, and fluorinated carbonate.

Examples of the electrolyte salt include LiClO₄, LiAsF₆, LiBF₄, LiPF₆, LiN (SO₂CF₃)₂, LiN (SO₂C₂F₅)₂, and the like, and from the viewpoint of having good cycle characteristics, LiPF₆, LiBF₄, LiN (SO₂CF₃)₂, LiN(SO₂C₂F₅)₂, or a combination thereof is particularly preferred.

The concentration of the electrolyte salt needs to be 0.8 mol/liter or more, and more preferably 1.0 mol/liter or more. The upper limit depends on the organic solvent for dissolving the electrolyte salt, but is usually 1.5 mol/liter or less.

### (Battery design)

The electrode mixture group may have a laminated structure in which the above-described positive electrode and negative electrode are interposed with a separator in between, or may have a structure in which the above-described positive electrode and negative electrode are spirally wound with the separator interposed therebetween.

### (Separator)

The material and shape of the separator are not limited as long as they are stable to the electrolytic solution and have excellent liquid retention properties, and known materials can be used. For example, resin, glass fiber, inorganic materials, and the like may be used, and it is preferable to use a porous sheet, nonwoven fabric, or the like having excellent liquid retention properties.

As the material of the resin or glass fiber separator, for example, a polyolefin such as polyethylene or polypropylene, an aromatic polyamide, PTFE, polyethersulfone, a glass filter, or the like can be used. These materials may be used alone or in combination of two or more in any combination and ratio, for example, as a polypropylene/polyethylene two-layer film or a polypropylene/polyethylene/polypropylene three-layer film.

Among these, from the viewpoint of having good electrolytic solution permeability and a good shut-down effect, the separator is preferably a porous sheet, nonwoven fabric, or the like made from a polyolefin such as polyethylene or polypropylene as a raw material.

Further, when using a porous material such as a porous sheet or a nonwoven fabric as the separator, the porosity of the separator may be any porosity, but is usually 20% or more, preferably 35% or more, and more preferably 45% or more. Further, the porosity is usually 90% or less, preferably 85% or less, and more preferably 75% or less. If the porosity is too much lower than the above range, membrane resistance tends to increase and the rate characteristics tend to deteriorate. Moreover, if the porosity is too much higher than the above range, the mechanical strength of the separator tends to decrease and the insulating property tends to decrease.

Further, the average pore size of the separator is also any pore size, but it is usually 0.5 µm or less, preferably 0.2 µm or less, and usually 0.05 µm or more. If the average pore size exceeds the above range, short circuits tend to occur. If the average pore size is below the above range, the film resistance may increase and the rate characteristics may deteriorate.

On the other hand, as the inorganic material, for example, oxides such as alumina and silicon dioxide, nitrides such as aluminum nitride and silicon nitride, and sulfates such as barium sulfate and calcium sulfate are used, and a material in the form of particles or fibers is used.

The separator is in the form of a thin membrane of a nonwoven fabric, a woven fabric, a microporous film, and the like. It is preferred to use a thin membrane having a pore size of 0.01 to 1 µm and a thickness of 5 to 50 µm. In addition to the independent thin membrane configuration described above, a separator can be used in which a composite porous layer containing the above-described inorganic particles is formed on the surface layer of the positive electrode and/or negative electrode using a resin binder.

For example, a porous layer may be formed on both sides of the positive electrode using alumina particles having a 90% particle size of less than 1 µm and a fluororesin as a binder.

The material of exterior case is not limited as long as it is stable to the electrolytic solution used. Specifically, a metal such as a nickel-plated steel plate, stainless steel, aluminum or an aluminum alloy, or a magnesium alloy, or a laminated film of a resin and aluminum foil is used. From the viewpoint of reducing weight, it is preferred to use a metal of aluminum or an aluminum alloy, or a laminate film.

Examples of exterior cases that use a metal include a hermetically sealed structure obtained by welding metal pieces together by laser welding, resistance welding, or ultrasonic welding, and a caulked structure obtained by caulking the metal pieces together using a resin gasket. Examples of exterior cases that use a laminate film include a hermetically sealed structure obtained by heat-sealing resin layers together. In order to improve sealability, a resin different from the resin used for the laminate film may be interposed between the resin layers. In particular, when using a sealed structure obtained by heat-sealing a resin layer via a current collector terminal, the metal and resin are joined together, and so it is preferred to use as the interposing resin a resin having a polar group or a modified resin having a polar group introduced therein.

The shape of the secondary battery may be any shape, and examples thereof include a cylindrical shape, a square shape, a laminate shape, a coin shape, a large-sized shape, and the like. The shape and configuration of the positive electrode, negative electrode, and separator can be changed in accordance with the shape of each battery.

### Examples

Hereinafter, the present disclosure will be specifically described based on examples.

In the following examples, "parts" and "%" represent "parts by mass" and "% by mass", respectively, unless otherwise specified.

### [Production Example 1]

At the point when 367 g of TFE (35.6% by mass with respect to the total polymerization amount of TFE of 1032 g) was consumed from the start of polymerization, an aqueous solution of 12.0 mg of hydroquinone as a radical scavenger dissolved in 20 ml of water was charged under pressure with TFE (concentration 4.0 ppm with respect to the aqueous medium). Polymerization was continued thereafter, and when the polymerized amount of TFE reached 1,000 g from the start of polymerization, the supply of TFE was stopped, gas in the system was immediately released to achieve normal pressure, the polymerization reaction ended, and an aqueous dispersion of polytetrafluoroethylene (solid content 31.2% by mass) was obtained. The resulting aqueous dispersion of polytetrafluoroethylene was diluted to a solid content concentration of 15%, and gently stirred in a container equipped with a stirrer in the presence of nitric acid to solidify the polytetrafluoroethylene. The solidified polytetrafluoroethylene was separated and dried at 160°C for 18 hours to obtain powdered PTFE-1.

### [Production Example 2]

Powdered PTFE-2 was obtained by referring to Reference Example 1 of International Publication No. WO 2012-063622.

Table 1 shows the physical properties of the produced PTFE.

**[Table 1]**

| Produced PTFE | Standard specific gravity | Moisture content (ppm) after drying |
|---|---|---|
| PTFE-1 | 2.16 | <250 |
| PTFE-2 | 2.19 | <250 |

### (Example 1)

A positive electrode active material LiNi_{0.8}Mn_{0.1}Co_{0.1}O₂, a sulfide-based solid-state electrolyte LPSCl (average particle size: 8 µm), and powdered PTFE-1 were weighed and mixed with a high-speed mixer (500 rpm, 1 minute) for homogenization. The stirring was performed by cooling the container to 10°C. Then, the mixture was mixed by stirring with a high-speed mixer (10000 rpm, 3 minutes) to obtain a secondary battery mixture. The stirring was performed by heating the container to 60°C. It is noted that the powdered PTFE-1 that was used had been dried in a vacuum dryer at 50°C for 1 hour. The powdered PTFE had been sieved in advance using a stainless steel sieve with an opening of 500 µm, and the material remaining on the sieve was used.

The composition ratio was adjusted to a mass ratio of positive electrode active material:solid-state electrolyte:binder = 85.2:14:0.8.

The obtained secondary battery mixture was formed into a bulk shape and calendered into a sheet. The calendaring was performed by heating to 80°C.

Then, a step coarsely crushing the obtained roll sheet by folding it in two, forming again into a bulk shape, and then rolling into a sheet shape using a metal roll on a flat plate to form fibrils was repeated four times. After that, the sheet was further rolled to obtain a secondary battery mixture sheet with a thickness of 500 µm. Further, the secondary battery mixture sheet was cut, put into a press, and rolled. The thickness was adjusted by repeatedly applying a load of 5 kN. The gap was adjusted so that the thickness of the final secondary battery mixture sheet was 150 µm. It is noted that the above operation was performed in an Ar glove box (dew point of about -80°C). The first roll rate was the largest at 39%.

### (Example 2)

A positive electrode active material LiNi_{0.5}Mn_{1.5}O₄, an oxide-based solid-state electrolyte Li_{1.3}Al_{0.3}Ti_{1.7}P₃O₁₂, and powdered PTFE-1 were weighed, and formed into a sheet based on the same procedure as in Example 1.

The composition ratio was adjusted to a mass ratio of positive electrode active material:solid-state electrolyte:binder = 80.2:19:0.8.

### (Example 3)

A conductive aid (acetylene black), the positive electrode active material LiNi_{0.8}Mn_{0.1}Co_{0.1}O₂, and powdered PTFE-1 were weighed, and formed into a sheet based on the same procedure as in Example 1.

The composition ratio was adjusted as shown in Table 2.

### (Example 4)

An oxide-based solid-state electrolyte Li_{6.25}La₃Zr₂Al_{0.25}O₁₂ and powdered PTFE-2 were weighed, and formed into a sheet based on the same procedure as in Example 1. The composition ratio was adjusted to a mass ratio of solid-state electrolyte:binder = 98.5:1.5.

### (Example 5)

The positive electrode active material LiNi_{0.8}Mn_{0.1}Co_{0.1}O₂, a conductive aid (carbon black: Super P Li) and powdered PTFE-4 were weighed, and stirred with a high-speed mixer (10000 rpm, 4 minutes) to obtain a mixture. The stirring was performed by heating the container to 60°C.

It is noted that the powdered PTFE-4 had been dried in a vacuum dryer at 50°C for 1 hour. The powdered PTFE had been sieved in advance using stainless steel sieves with openings of 425 µm and 355 µm. The material that passed through the sieve with an opening of 425 µm and remained on the sieve with an opening of 355 µm was used. The composition ratio was adjusted as shown in Table 2.

The resulting mixture was formed into a bulk shape and rolled into a sheet. The rolling was performed at room temperature.

Then, a step of coarsely crushing the roll sheet obtained in the previous step by folding it in two, forming again into a bulk shape, and then rolling into a sheet shape using a metal roll on a flat plate to promote the formation of fibrils was repeated three times. After that, the sheet was further rolled to obtain a secondary battery mixture sheet with a thickness of 500 µm. Further, the secondary battery mixture sheet was cut, put into a press, and rolled. The thickness was adjusted by repeatedly applying a load of 5 kN. The gap was adjusted so that the thickness of the final secondary battery mixture sheet was 150 µm.

Each test was carried out as follows.

### [Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

### [PTFE fibril diameter (median value)]

(1) Using a scanning electron microscope (Model S-4800, manufactured by Hitachi, Ltd.), an enlarged photograph (7,000x) of the secondary battery mixture sheet was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the secondary battery mixture sheet was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

### [Flexibility evaluation]

A 2 cm long and 6 cm wide test piece was cut from the produced secondary battery mixture sheet. The test piece was wound around a round bar with a diameter of 4 mm, and then visually observed and evaluated according to the following criteria. Cases in which damage or cracks were not observed were evaluated as "pass" (circle), and cases in which cracks were observed were evaluated as "fail" (cross).

### [Strength measurement]

Using a digital force gauge (ZTS-20N manufactured by Imada), the strength of a strip-shaped electrode mixture test piece with a width of 4 mm under the condition of 100 mm/min was measured. The chuck-to-chuck distance was 30 mm. Displacement was applied until breakage, and the maximum stress obtained in the measured results was taken as the strength of each sample. The tests were carried out five times, and the average value was taken as the strength.

The test results are shown in Table 2.

**[Table 2]**

| | Binder | Composition | Fibril diameter [nm] | Flexibility | Strength [N/mm²] |
|---|---|---|---|---|---|
| Example 1 | PTFE-1 | active material: solid-state electrolyte: binder= 85.2:14:0.8 | 49 | ○ | 0.36 |
| Example 2 | PTFE-1 | active material: solid-state electrolyte: binder= 80.2:19:0.8 | 30 | ○ | 0.21 |
| Example 3 | PTFE-1 | active material: conductive aid: binder= 97.7:1.5:0.8 | 32 | ○ | 0.24 |
| Example 4 | PTFE-2 | solid-state electrolyte:binder= 98.5:1.5 | 33 | ○ | 0.17 |
| Example 5 | PTFE-1 | active material: conductive aid: binder= 96.5:1.5:2.0 | 25 | × | 0.11 |

From the results in Table 2, it can be seen that a mixture sheet could be produced even with a small amount of binder, and that the secondary battery mixture sheet of the Examples had excellent physical properties. By homogenizing at a low temperature, the dispersibility of the PTFE could be further improved while suppressing the generation and growth of fibrils. Further, by heating during forming, the generation of fibrils could be increased, the entanglement of fibrils was promoted, and a sheet with a high strength could be produced. In addition, by increasing the secondary particle size of the PTFE powder, the handling properties of the powder were also excellent.

As described above, according to the method for producing a mixture sheet of the present disclosure, the binder can have a specific fibril diameter, and even if the amount of binder is small, a mixture sheet with a high strength can be obtained.

### Industrial Applicability

The secondary battery mixture of the present disclosure and the secondary battery mixture sheet containing the same can be used to produce a secondary battery.

## Claims

1. A secondary battery mixture, comprising a solid-state electrolyte and/or electrode active material, and a binder, wherein
the binder is a fibrillatable resin having a fibrous structure with a fibril diameter (median value) of 100 nm or less, and is contained in the secondary battery mixture in an amount of 0.3% by mass or more and 8% by mass or less.

2. The secondary battery mixture according to claim 1, wherein the fibrillatable resin is a polytetrafluoroethylene resin.

3. The secondary battery mixture according to claim 1 or 2, which is obtained by using a raw material composition containing a solid-state electrolyte and/or electrode active material, and a binder, wherein
the binder in the raw material composition is a powdered fibrillatable resin.

4. The secondary battery mixture according to claim 3, wherein the powdered fibrillatable resin has a moisture content of 500 ppm or less.

5. The secondary battery mixture according to claim 3 or 4, wherein the powdered fibrillatable resin is a powdered polytetrafluoroethylene resin.

6. The secondary battery mixture according to claim 5, wherein the powdered polytetrafluoroethylene resin has a standard specific gravity of 2.12 to 2.20.

7. The secondary battery mixture according to claim 5 or 6, wherein the powdered polytetrafluoroethylene resin includes 80% by mass or more of a polytetrafluoroethylene resin having a secondary particle size of 450 µm or more.

8. The secondary battery mixture according to any one of claims 1 to 7, which is for a solid-state secondary battery.

9. A secondary battery mixture sheet comprising the secondary battery mixture according to any one of claims 1 to 8.

10. An electrode comprising the secondary battery mixture sheet according to claim 9.

11. A method for producing a secondary battery mixture sheet including a solid-state electrolyte and/or electrode active material, and a binder, wherein the binder is a fibrillatable resin having a fibrous structure with a fibril diameter (median value) of 100 nm or less, and is contained in the secondary battery mixture in an amount of 0.3% by mass or more and 8% by mass or less,
the method comprising:
(a) mixing the solid-state electrolyte and/or electrode active material and the binder to form the secondary battery mixture; and
(b) calendering or extrusion-forming the secondary battery mixture to produce a sheet,
wherein the mixing in (a) includes:
(a1) homogenizing the solid-state electrolyte and/or electrode active material and the binder into a powder; and
(a2) mixing the powdered raw material composition obtained in (a1) to prepare the secondary battery mixture.

12. The method for producing a secondary battery mixture sheet according to claim 11, wherein the homogenization in (al) is performed at a temperature of 19°C or lower, and the mixing in (a2) is performed at a temperature of 30°C or higher.

13. The method for producing a secondary battery mixture sheet according to claim 11 or 12, wherein in (b), the calendering or extrusion is performed at a temperature of 30 to 150°C.

14. The method for producing a secondary battery mixture sheet according to any one of claims 11 to 13, wherein the mixing in (a) is performed while applying a shear force.

15. A secondary battery comprising the secondary battery mixture sheet according to claim 9.
